# EUROPEAN PATENT SPECIFICATION

(11) **EP 1 336 730 B1**
(45) Date of publication and mention of the grant of the patent: **28.03.2007**
(21) Application number: 03003042.3
(22) Date of filing: 12.02.2003
(51) Int. Cl.: F01N 3/028, F01N 3/023, F01N 3/022, F01N 3/035

(54) **Particulate removal system**
System zur Entfernung von Partikeln
Système d'élimination de particules

(30) Priority: 14.02.2002 JP 2002036298
(43) Date of publication of application: 20.08.2003
(73) Proprietor: HONDA GIKEN KOGYO KABUSHIKI KAISHA, Minato-ku Tokyo (JP)
(72) Inventor: Terada, Kazuhide, 1-4-1 Chuo, Wako-shi, Saitama (JP); Matsuo, Yuichi, 1-4-1 Chuo, Wako-shi, Saitama (JP); Hayashi, Tadayoshi, 1-4-1 Chuo, Wako-shi, Saitama (JP)
(74) Representative: Prechtel, Jörg

(56) References cited:
- US-A- 4 346 557
- US-A- 5 194 078
- PATENT ABSTRACTS OF JAPAN vol. 018, no. 628 (M-1713), 30 November 1994 (1994-11-30) & JP 06 241022 A (TOYOTA MOTOR CORP), 30 August 1994 (1994-08-30)
- PATENT ABSTRACTS OF JAPAN vol. 018, no. 628 (M-1713), 30 November 1994 (1994-11-30) & JP 06 241020 A (TOYOTA MOTOR CORP), 30 August 1994 (1994-08-30)

## Description

### BACKGROUND OF THE INVENTION

### FIELD OF THE INVENTION

The present invention relates to a particulate removal system in which a case provided partway along an exhaust system leading to an engine houses a filter that collects particulates contained in an exhaust gas, and an electromagnetic wave heating device for burning the particulates collected by the filter is connected to the case.

### DESCRIPTION OF THE RELATED ART

Conventionally, such a system is already known from, for example, Japanese Patent Application Laid-open Nos. 6-241020 and 6-241021, in which heating by the electromagnetic wave heating device causes the particulates collected by the filter to be burned and removed, thereby reducing the amount of particulates discharged from the exhaust system.

However, in the arrangements disclosed in the above publications, since the electromagnetic wave heating device is connected to the case on the downstream side of the filter, and the entire filter within the case is heated by the electromagnetic wave heating device, it cannot be said that the energy efficiency is high.

US 5,194,078 discloses a particulate movable system in accordance with the preamble of claim 1.

### SUMMARY OF THE INVENTION

The present invention has been achieved in view of the above-mentioned circumstances, and it is an object thereof to provide a particulate removal system that can burn and remove the particulates collected by a filter with excellent energy efficiency.

In order to accomplish this object, in accordance with the present invention, there is proposed a particulate removal system comprising: a case provided partway along an exhaust system leading to an engine; a filter that collects particulates contained in an exhaust gas, the filter being housed within the case; and an electromagnetic wave heating device for burning the particulates collected by the filter, the electromagnetic wave heating device being connected to the case; wherein the filter comprises an upstream side filter section and a downstream side filter section; and wherein the electromagnetic wave heating device is connected to the case on the upstream side of the upstream side filter section, characterized in that the upstream side filter section is divided from the downstream side filter section by an electromagnetic wave shielding plate disposed between the upstream side filter section and the downstream side filter section.

In accordance with such an arrangement the particulates collected by the upstream side filter section are burned and removed by the electromagnetic wave heating device, and the heat of combustion generated by burning of the particulates and the heat applied to the upstream side filter section by the electromagnetic wave heating device are transferred to the downstream side filter section, thereby enabling the particulates collected by the downstream side filter section to be burned and removed. That is, the thermal energy that the electromagnetic wave heating device needs to generate can be reduced, and it becomes possible to reduce the size of the electromagnetic wave heating device by virtue of the excellent energy efficiency.

By the electromagnetic wave shielding plate electromagnetic waves can be effectively applied to the upstream side filter section, to thereby improve the energy efficiency as well as the durability of the downstream side filter section.

Preferably, the upstream side filter section is of a fiber type and made of SiC, and the downstream side filter section is of a wall flow type and made of cordierite. In accordance with such an arrangement, since the collection efficiency of the upstream side filter section employing the fiber can be set freely, setting a high collection efficiency can enhance the particulate collection performance, and employing the wall flow type for the downstream side filter section can enhance the durability thereof. Moreover, the use of inexpensive cordierite can reduce the cost.

Preferably, a catalyst is carried on the surface of the filter. In accordance with such an arrangement, since the ignition temperature of the particulates can be decreased, the energy input by the electromagnetic wave heating device can be reduced, thereby achieving even better energy efficiency.

Preferably, a catalyst is housed within the case on the upstream side of the upstream side filter section. In accordance with such an arrangement, since the temperature of the exhaust gas increases due to burning by the catalyst of unburned HCs and CO, the increase in temperature of the filter required to achieve a target temperature can be reduced in comparison with the case where no catalyst is housed in the case, so that the filter can be heated with yet greater efficiency. Furthermore, when the upstream side filter section is heated by the electromagnetic wave heating device, the catalyst is also heated via a case wall, thereby activating the catalyst and improving the properties of the exhaust gas.

The above-mentioned object, other objects, characteristics and advantages of the present invention will become apparent from an explanation of preferred embodiments that will be described in detail below by reference to the attached drawings.

### BRIEF DESCRIPTION OF THE DRAWINGS

FIG. 1 is a longitudinal cross-sectional view of a particulate removal system of a first embodiment.
FIG. 2 is a longitudinal cross-sectional view of a particulate removal system of a second embodiment.
FIG. 3 is a longitudinal cross-sectional view of a particulate removal system of a comparative example.
FIG. 4 is a longitudinal cross-sectional view of a particulate removal system of a third embodiment.

### DESCRIPTION OF PREFERRED EMBODIMENTS

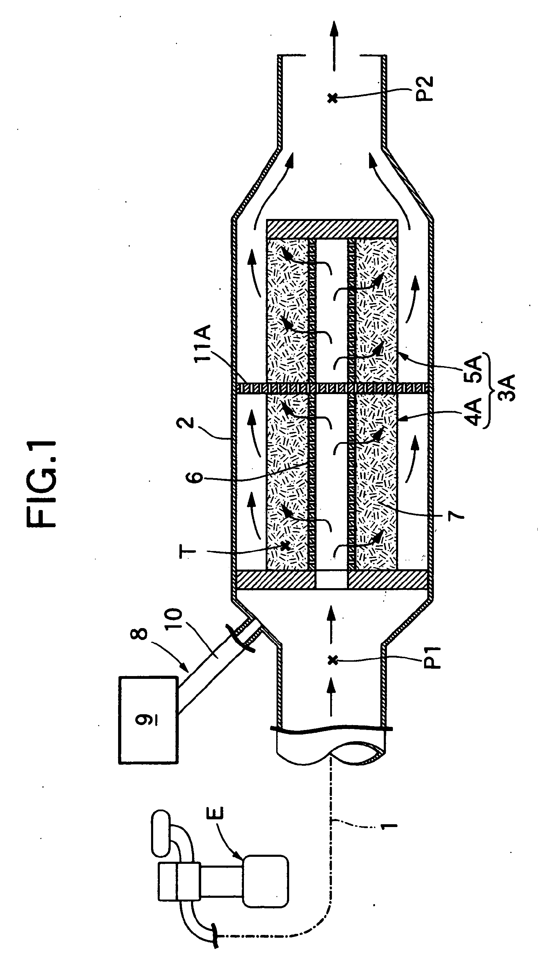

FIG. 1 illustrates a first embodiment of the present invention. A metal case 2 is disposed partway along an exhaust system 1 leading to a diesel engine E. The case 2 houses a filter 3A for collecting particulates contained in the exhaust gas discharged from the diesel engine E.

The filter 3A is of a fiber type formed by winding a fiber 7 around a bottomed perforated metal cylinder 6 which has, for example, its upstream end open and its downstream end closed. The fiber 7 is made of, for example, SiC. The exhaust gas discharged from the diesel engine E flows substantially uniformly from the inner periphery of the perforated metal cylinder 6 to the outer periphery of the fiber 7, the particulates contained in the exhaust gas being collected by the filter 3A substantially uniformly in the direction of the flow, which advantageously improves the removal efficiency when regenerating the filter 3A by burning and removing the particulates.

Connected to the case 2 on the upstream side of the filter 3A is an electromagnetic wave heating device 8 for burning and removing the particulates collected by the filter 3A, the device 8 including a microwave generator 9 and a waveguide 10 leading to the microwave generator 9. Moreover, in order to limit the target area to be heated by the electromagnetic wave heating device 8 to the upstream side section of the filter 3A, an electromagnetic wave shielding plate 11A for dividing the filter 3A into an upstream side filter section 4A and a downstream side filter section 5A is fixed within the case 2 so as to be disposed in a middle section of the filter 3A.

The electromagnetic wave shielding plate 11A is formed by utilizing the property of microwaves that the microwaves guided from the microwave generator 9 to the interior of the case 2 via the waveguide 10 cannot pass through holes having a diameter that is smaller than the wavelength of the microwaves, for example, holes having a diameter of 50 mm or less. A plate having a large number of small holes such as, for example, a perforated metal plate is employed as the electromagnetic wave shielding plate 11A. The electromagnetic wave shielding plate 11A thereby prevents the microwaves from being transmitted from the upstream side filter section 4A to the downstream side filter section 5A.

The operation of the first embodiment is now explained. When the pressure loss of the filter 3A increases as the amount of collected particulates increases during operation of the diesel engine E, the particulates collected by the filter 3A are burned and removed by means of the electromagnetic wave heating device 8. The filter 3A is divided into the upstream side filter section 4A and the downstream side filter section 5A within the case 2, and the electromagnetic wave heating device 8 is connected to the case 2 on the upstream side of the upstream side filter section 4A.

As a result, only the upstream side filter section 4A is heated by the electromagnetic wave heating device 8, and the particulates collected by the upstream side filter section 4A are burned and removed. Moreover, when the upstream side filter section 4A is heated by the electromagnetic wave heating device 8, if the upstream side filter section 4A is of the fiber type using SiC as in the first embodiment, it is known that the energy input by the electromagnetic wave heating device 8 can be converted into heat with substantially 100% efficiency. The SiC fiber 7 is directly heated by the electromagnetic wave heating device 8, and the particulates collected by the SiC fiber 7 can be directly burned and removed, thereby burning and removing the particulates collected by the upstream side filter section 4A with a high efficiency.

Furthermore, the heat generated when the particulates are burned and converted into CO₂ and H₂O is transmitted to the downstream side filter section 5A. Also transmitted to the downstream side filter section 5A is the heat generated in the upstream side filter section 4A by the microwaves from the electromagnetic wave heating device 8, thereby burning and removing the particulates collected by the downstream side filter section 5A.

That is, the electromagnetic wave heating device 8 only has to input energy sufficient to heat the upstream side filter section 4A, thus reducing the energy input by the electromagnetic wave heating device 8 and thereby achieving excellent energy efficiency. As a result, it becomes possible to reduce the size of the electromagnetic wave heating device 8.

Moreover, since the electromagnetic wave shielding plate 11A is disposed between the upstream side and downstream side filter sections 4A and 5A, the microwaves from the electromagnetic wave heating device 8 can be applied effectively to the upstream side filter section 4A, thereby enhancing the energy efficiency.

The total of the heat generated by burning of the particulates in the upstream side filter section 4A and transmitted to the downstream side filter section 5A, and the heat applied by the electromagnetic wave heating device 8 to the upstream side filter section 4A and transmitted to the downstream side filter section 5A, is required to be at a level that can maintain the temperature of the downstream side filter section 5A at or above the ignition temperature of the particulates. It is therefore necessary to set the volume ratio of the upstream side filter section 4A to the downstream side filter section 5A appropriately, and the maximum thermal efficiency can thus be obtained.

It is also possible for a catalyst to be carried on the filter 3A, which can decrease the ignition temperature of the particulates, thus reducing the energy input by the electromagnetic wave heating device 8 and thereby achieving excellent energy efficiency.

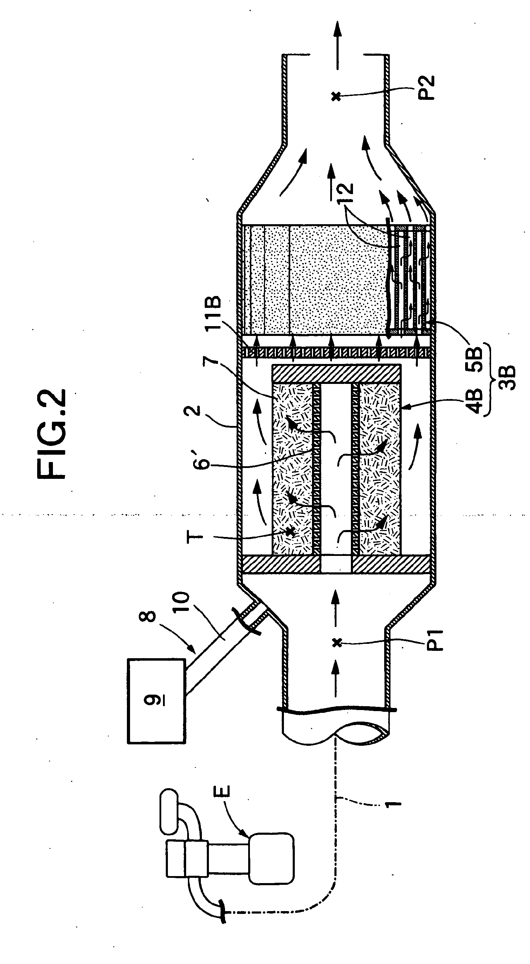

FIG. 2 illustrates a second embodiment of the present invention. A case 2 disposed partway along an exhaust system 1 leading to a diesel engine E houses a filter 3B for collecting particulates. This filter 3B is divided into an upstream side filter section 4B and a downstream side filter section 5B by means of an electromagnetic wave shielding plate 11B as in the first embodiment.

The upstream side filter section 4B is of a fiber type formed by winding a fiber 7 made of SiC around a bottomed perforated metal cylinder 6' which has, for example, its upstream end open and its downstream end closed. The downstream side filter section 5B is of a wall flow type having a large number of through holes 12. The upstream ends and downstream ends of adjacent through holes 12 are alternately closed. The downstream side filter section 5B is made of, for example, cordierite having a pore size of 20 µm or less.

An electromagnetic wave heating device 8 is connected to the case 2 on the upstream side of the upstream side filter section 4B.

In accordance with the second embodiment, it is possible to improve the particulate collection performance, enhance the durability of the downstream side filter section 5B, and achieve a reduction in cost.

That is, the cordierite forming the downstream side filter section 5B is less expensive than SiC, whereas SiC has a melting point higher than that of cordierite and is superior in terms of heat resistance. Moreover, the upstream side filter section 4B has the advantage in that the collection efficiency can be set as desired by changing the amount of fiber 7 that is wound around it. It is therefore possible to achieve a reduction in cost by forming the upstream side filter section 4B, which is required to have a heat resistance, of the fiber type using the fiber 7 made of SiC, and forming the downstream side filter section 5B, which is less required to have a heat resistance, of the wall flow type using cordierite. Since it is also possible to set as desired the collection efficiency in the upstream side filter section 4B of the fiber type by changing the amount of fiber 7 that is wound around it, setting the collection efficiency of the upstream side filter section 4B comparatively high can increase the durability of the downstream side cordierite filter section 5B, to thereby contribute to an increase of the overall collection efficiency.

When the particulates collected by the filter 3B are burned and removed, it is only necessary to heat the upstream side filter section 4B by the electromagnetic wave heating device 8, as in the first embodiment. In this process, the heat generated by the burning of particulates in the upstream side filter section 4B and the heat generated in the upstream side filter section 4B by the microwaves from the electromagnetic wave heating device 8, are transmitted to the downstream side filter section 5B, so that it becomes possible to burn and remove the particulates collected by the downstream side filter section 5B. It is therefore possible to reduce the energy input by the electromagnetic wave heating device 8, achieve an excellent energy efficiency, and reduce the size of the electromagnetic wave heating device 8.

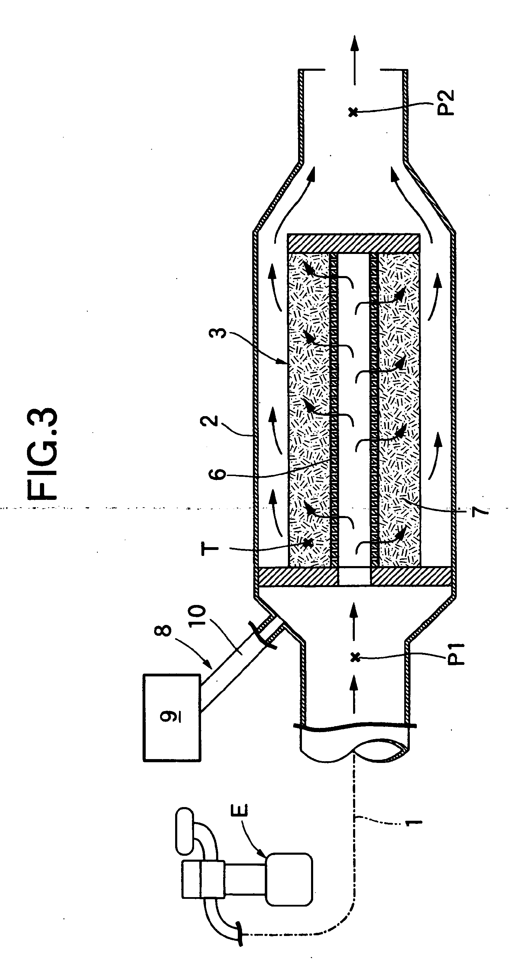

The energy required for burning and removing particulates in the exhaust system of a 1.6 L diesel engine was compared between the particulate removal systems of the first and second embodiments, and a particulate removal system having a conventional structure as shown by a comparative example in FIG. 3 in which a filter 3 of the fiber type formed by winding a fiber 7 made of SiC around a bottomed perforated metal cylinder 6 is housed in a case 2 without dividing the filter 3 into two. In this comparison, the case 2 used had a diameter of 120 mm and a length of 142 mm, and the diesel engine E was operated at a vehicle speed of 60 km/h. Furthermore, a pressure P1 on the upstream side of the filters 3A, 3B, 3, a pressure P2 on the downstream side of the filters 3A, 3B, 3, and a temperature T in the upstream section of each of the filters 3A, 3B, 3 were detected; when P1 - P2 > 20 kPa, the power to the electromagnetic wave heating device 8 was turned ON; and when P1 - P2 < 0.5 kPa, the power to the electromagnetic wave heating device 8 was turned OFF.

In accordance with this comparison experiment, in the particulate removal system of the first embodiment the electromagnetic wave heating device 8 required an energy of 140 kJ for burning and removing the particulates; in the particulate removal system of the second embodiment the electromagnetic wave heating device 8 required an energy of 123 kJ for burning and removing the particulates; and in the particulate removal system of the comparative example the electromagnetic wave heating device 8 required an energy of 204 kJ for burning and removing the particulates. That is, it has been confirmed that, in accordance with the particulate removal systems of the first and second embodiments, the energy required for burning and removing the particulates can be greatly reduced as compared with the conventional system.

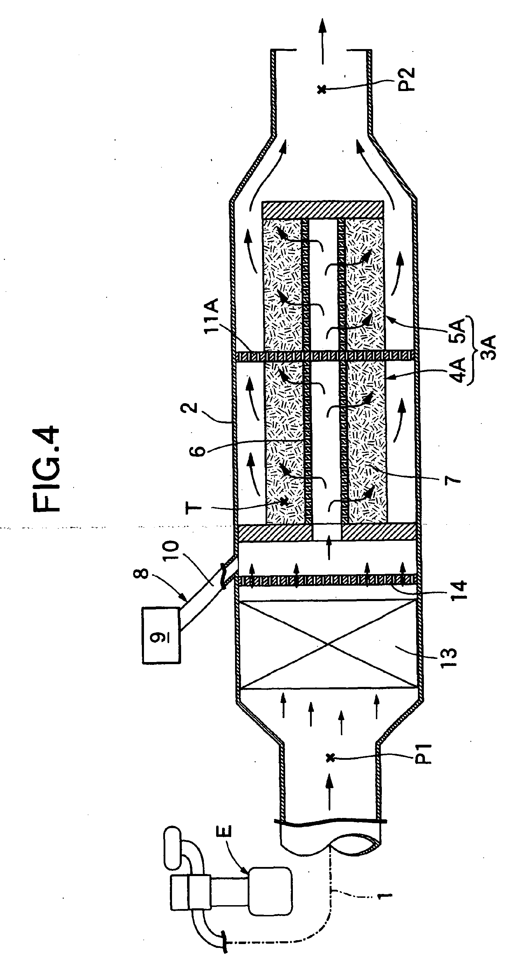

FIG. 4 illustrates a third embodiment of the present invention. A case 2 disposed partway along an exhaust system 1 leading to a diesel engine E houses a filter 3A divided into an upstream side filter section 4A and a downstream side filter section 5A, a catalyst 13 disposed on the upstream side of the upstream side filter section 4A, and an electromagnetic wave shielding plate 14 disposed between the catalyst 13 and the filter 3A. An electromagnetic wave heating device 8 is connected to the case 2 between the electromagnetic wave shielding plate 14 and the filter 3A.

In accordance with the third embodiment, the same effects as in the first embodiment can be obtained. Moreover, since the exhaust gas temperature increases due to burning of unburned HCs and CO by the catalyst, an increase in the temperature of the filter 3A required for achieving a target temperature can be reduced as compared with the case where no catalyst is housed within the case 2, thereby heating the filter 3A with a higher efficiency. Since the catalyst 13 is also heated via the wall of the case 2 when heating the upstream side filter section 4A by means of the electromagnetic wave heating device 8, the catalyst 13 can be activated to improve the properties of the exhaust gas.

Although embodiments of the present invention are explained above, the present invention is not limited by the above-mentioned embodiments, and can be modified in a variety of ways without departing from the present invention described in the claims.

For example, in the above-mentioned embodiments, the present invention is applied to a diesel engine E, but it is also possible to apply the present invention to a gasoline engine.

## Claims

1. A particulate removal system comprising:
a case (2) provided partway along an exhaust system (1) leading to an engine (E);
a filter (3A, 3B) that collects particulates contained in an exhaust gas, the filter (3A, 3B) being housed within the case (2); and
an electromagnetic wave heating device (8) for burning the particulates collected by the filter (3A, 3B), the electromagnetic wave heating device (8) being connected to the case;
wherein the filter (3A, 3B) comprises an upstream side filter section (4A, 4B) and a downstream side filter section (5A, 5B); and
wherein the electromagnetic wave heating device (8) is connected to the case (2) on the upstream side of the upstream side filter section (4A, 4B),
**characterized in that** the upstream side filter section (4A, 4B) is divided from the downstream side filter section (5A, 5B) by an electromagnetic wave shielding plate (11A, 11 B) disposed between the upstream side filter section (4A, 4B) and the downstream side filter section (5A, 5B).

2. The particulate removal system according to Claim 1 wherein the upstream side filter section (4B) is of a fiber type and made of SiC, and the downstream side filter section (5B) is of a wall flow type and made of cordierite.

3. The particulate removal system according to Claim 1 or 2, further comprising a catalyst carried on the surface of the filter (3A, 3B).

4. The particulate removal system according to any one of Claims 1 to 3, further comprising a catalyst (13) housed within the case (2) on the upstream side of the upstream side filter section (4A).

## Patentansprüche

1. Partikelbeseitigungssystem umfassend:
ein Gehäuse (2), das auf einem Teil des Wegs entlang einem zu einem Motor (E) führenden Auspuffsystem (1) vorgesehen ist;
einen Filter (3A, 3B), der im Abgas enthaltene Partikel sammelt, wobei der Filter (3A, 3B) innerhalb des Gehäuses (2) aufgenommen ist; und
eine Elektromagnetische-Wellen-Heizvorrichtung (8) zum Verbrennen der vom Filter (3A, 3B) gesammelten Partikel, wobei die Elektromagnetische-Wellen-Heizvorrichtung (8) mit dem Gehäuse verbunden ist;
worin der Filter (3A, 3B) einen stromaufwärtigen Filterabschnitt (4A, 4B) und einen stromabwärtigen Filterabschnitt (5A, 5B) aufweist; und
worin die Elektromagnetische-Wellen-Heizvorrichtung (8) mit dem Gehäuse (2) an der stromaufwärtigen Seite des stromaufwärtigen Filterabschnitts (4A, 4B) verbunden ist,
**dadurch gekennzeichnet, dass** der stromaufwärtige Filterabschnitt (4A, 4B) von dem stromabwärtigen Abschnitt (5A, 5B) durch eine Elektromagnetische-Wellen-Abschirmplatte (11A, 11B), die zwischen dem stromaufwärtigen Filterabschnitt (4A, 4B) und dem stromabwärtigen Filterabschnitt (5A, 5B) angeordnet ist, abgeteilt ist.

2. Partikelbeseitigungssystem nach Anspruch 1, worin der stromaufwärtige Filterabschnit (4B) vom Fasertyp und aus SiC hergestellt ist, und der stromabwärtige Filterabschnitt (5B) vom Wandströmungstyp und aus Cordierit hergestellt ist.

3. Partikelbeseitigungssystem nach Anspruch 1 oder 2, das ferner einen auf der Oberfläche des Filters (3A, 3B) angebrachten Katalysator aufweist.

4. Partikelbeseitigungssystem nach einem der Ansprüche 1 bis 3, das ferner einen Katalysator (13) aufweist, der in dem Gehäuse (2) an der stromaufwärtigen Seite des stromaufwärtigen Filterabschnitts (4A) aufgenommen ist.

## Revendications

1. Système d'élimination de particules comprenant :
un boîtier (2), prévu en un emplacement le long d'un système d'échappement (1) menant à un moteur thermique (E) ;
un filtre (3A, 3B), collectant des particules contenues dans des gaz d'échappement, le filtre (3A, 3B) étant logé dans le boîtier (2) ; et
un dispositif à chauffage par ondes électromagnétiques (8), pour brûler les particules collectées par le filtre (3A, 3B), le dispositif de chauffage à ondes électromagnétiques (8) étant connecté au boîtier ;
dans lequel le filtre (3A, 3B) comprend une section de filtre (4A, 4B) de côté amont et une section de filtre (5A, 5B) de côté aval ; et
dans lequel le dispositif de chauffage à ondes électromagnétiques (8) est connecté au boîtier (2), sur le côté amont de la section de filtre (4A, 4B) de côté amont,
**caractérisé en ce que** la section de filtre (4A, 4B) de côté amont est séparée vis-à-vis de la section de filtre (5A, 5B) de côté aval, par une plaque d'écrantage des ondes électromagnétiques (11A, 11B), disposée entre la section de filtre (4A, 4B) de côté amont et la section de filtre (5A, 5B) de côté aval.

2. Système d'élimination de particules selon la revendication 1, dans lequel la section de filtre (4B) de côté amont est de type à fibres et est formée de SiC, et la section de filtre (5B) de côté aval est de type à écoulement sur une paroi et est formée de cordiérite.

3. Système d'élimination de particules selon la revendication 1 ou 2, comprenant en outre un catalyseur, porté sur la surface du filtre (3A, 3B).

4. Système d'élimination de particules selon l'une des revendications 1 à 3, comprenant en outre un catalyseur (13), logé dans le boîtier (2) sur le côté amont de la section de filtre (4A) de côté amont.
